(19) Europäisches Patentamt
European Patent Office
Office européen des brevets

(11) EP 0 728 268 B1

(12) EUROPEAN PATENT SPECIFICATION

(45) Date of publication and mention
of the grant of the patent:
25.02.1998 Bulletin 1998/09

(51) Int Cl.6: F16F 15/30, H02K 7/02,
H02K 7/08

(21) Application number: 95902342.5

(22) Date of filing: 09.11.1994

(86) International application number:
PCT/NL94/00281

(87) International publication number:
WO 95/13490 (18.05.1995 Gazette 1995/21)

(54) **FLYWHEEL ENERGY STORAGE DEVICE**

ENERGIESPEICHER - SCHWUNGRAD

DISPOSITF D'EMMAGASINAGE D'ENERGIE A VOLANT

(84) Designated Contracting States:
BE CH DE FR GB IT LI NL

(30) Priority: 10.11.1993 NL 9301949

(43) Date of publication of application:
28.08.1996 Bulletin 1996/35

(73) Proprietor: CCM BEHEER B.V.
NL-5672 AD Nuenen (NL)

(72) Inventor: THOOLEN, Franciscus, Johan, Marie
NL-6085 BM Horn (NL)

(74) Representative:
Timmers, Cornelis Herman Johannes et al
van Exter Polak & Charlouis B.V.,
P.O. Box 3241
2280 GE Rijswijk (NL)

(56) References cited:
EP-A- 0 467 427          FR-A- 1 475 945
FR-A- 2 292 155          US-A- 4 088 041

- ALSTHOM REVIEW, no.4, 1985, PARIS, FRANCE pages 27 - 38 P. BOURCIER 'Designing shaftlines for turbine generators.'
- SCIENTIFIC AMERICAN, vol.229, no.6, December 1973, USA pages 17 - 23 R.F. POST ET AL. 'Flywheels'
- IEEE CONFERENCE PAPER, vol.71, no.739, 24 August 1971, NEW YORK, USA pages 1 - 9 Z.A. TENDORF 'Vibratory motor applications in materials handling.'

## Description

The invention relates to a flywheel energy storage device, comprising a housing supported by the environment, a central stator supported therein, and a rotor, which is supported rotatably by said stator by means of two ball-bearings, is coaxial with said stator and encloses it.

Such a flywheel energy storage device is described in Applicants' own publication: New Results on Flywheel System EMAFER by F. Thoolen, 1ECEC 1988, Paper No. 889228.

In order to achieve both a high efficiency and a great energy storage capacity, it is essential for the rotor to rotate at very high speeds, of the order of magnitude of 18,000 to 20,000 revolutions per minute. Of course, vibration-free running must be ensured all the time while it is passing through the full speed range from standstill up to this value, and this makes particularly great demands on the rotor bearings. In fact, such demands cannot be met with the known bearings and bearing supports.

The object of the invention is to provide a solution to this problem. According to the invention, this solution is achieved in that said ball-bearings have a first radial stiffness with value S1 and are each accommodated between the rotor and a top and bottom auxiliary carrier respectively, the top auxiliary carrier, directly coupled to the top end of the central, cylindrical stator is supported on the top bearing by means of a top coupling element having a second radial stiffness $S2_b$, and the bottom auxiliary carrier, directly coupled to the bottom end of the central, cylindrical stator is supported on the bottom bearing by means of a bottom coupling element having a second radial stiffness $S2_o$, the value of $S2_b$, $S2_o$ respectively, lying between $1/50\ S1$ and $1/2\ S1$, while the respective auxiliary carriers are connected at the top and bottom side to the housing by means of coupling elements respectively, whose combined radial stiffness has a value S3 lying between 1/50 and 1/5 of the mean value of $S2_b$ and $S2_o$ :
$$\frac{(S2_b + S2_o)}{2}$$
and the following also applies:
$$1E8 \lessgtr S1 \le 5E8\ \text{N/m}.$$

The housing support preferably has a fourth radial stiffness with a total value S4 lying between $1/500\ S1$ and $1/50\ S1$.

A preferred embodiment is characterized by the following values of the respective radial stiffnesses:

$S1 = 2\ E8\ \text{N/m}$
$S2_b = 0.7\ E7\ \text{N/m}$
$S2_o = 6\ E7\ \text{N/m}$
$S3 = 2\ E6\ \text{N/m}$
$S4 = 2\ E6\ \text{N/m}$

Further preferred embodiments of the flywheel energy storage device according to the invention are described in claim 4 and 5.

The invention is explained with reference to the drawing, in which:

Figure 1 is a diagrammatic longitudinal section through a flywheel energy storage device in which the measures according to the invention are used;
Figure 2 is a diagrammatic illustration of the equivalent components of a coupling element used in said flywheel energy storage device;
Figures 3 to 6 are diagrammatic half longitudinal sections of specific embodiments of such a coupling element.

The flywheel system for energy storage indicated in its entirety by reference numeral 1 in the figure comprises a housing 2, which is evacuated during operation and which is by means of a top coupling element 4a and a bottom coupling element 4b, supported on the solid environment, diagrammatically indicated by 6a and 6b. The specific design of said coupling elements 4a, 4b will be explained further below.

Said housing 2 bears, by means of a set of second coupling elements, i.e. a top element indicated by 8a and a bottom element indicated by 8b, a top auxiliary carrier 10a, which is stationary during operation, and a bottom auxiliary carrier 10b, which is also stationary during operation. Each of these auxiliary carriers 10a, 10b is directly coupled to the top end 12a and the bottom end 12b respectively of the central, cylindrical stator 14, which bears electrical windings (not shown).

The auxiliary carriers 10a, 10b are directly connected by means of two third coupling elements, i.e. the top coupling element 16a and the bottom coupling element 16b respectively, to the stationary outer race of a top and bottom ball-bearing 18a, 18b respectively, the inner race of which is connected by means of an S-shaped connecting piece (which is the subject of Dutch Patent Application 9201585 in the name of Applicants, which is not a prior publication) 20a, 20b respectively to the rotor 22. The latter bears on its inner surface the permanent magnets (not shown) and on its outer surface the disc-shaped flywheels 24. The radial stiffness of the connection between the flywheels 24 and the rotor 22, which can be designed, for example, in the way described in Dutch Patent Application 9201584 (in the name of Applicants), is very great, for example of the order of magnitude of 1E9 N/m.

The invention is based on the insight that good vibration behaviour of this whole unit, also while passing through the full operating speed range (which lies between zero and twenty thousand revolutions per minute) is obtained if the radial stiffnesses, expressed in N/m, of the respective supports mentioned above comply with or lie between certain values. The following terms are used below in the definition thereof:
Radial stiffness of the ball-bearings 18a, 18b = S1 (per bearing).
Radial stiffness of the top coupling element 16a between stationary outer race of ball-bearing 18a and auxiliary carrier 10a = $S2_b$.

Radial stiffness of the bottom coupling element 16b between stationary outer race of ball-bearing 18b and bottom auxiliary carrier 10b = $S2_o$.

Combined radial stiffness of the coupling elements 8a, 8b between auxiliary carriers 10a and 10b and housing 2 = S3.

Total radial stiffness of the coupling elements 4a, 4b between the housing 2 and the environment 6a, 6b = S4.

Then the following applies:

$$1E8 \leq S1 \leq 5E8$$
$$1/50\ S1 \leq S2_b \leq 1/2\ S1$$
$$1/50\ S1 \leq S2_o \leq 1/2\ S1$$
$$1/50\ \frac{(S2_b + S2_o)}{2} \leq S3 \leq 1/5\ \frac{(S2_b + S2_o)}{2}$$

and the following also applies:
$$1/500\ S1 \leq S4 \leq 1/50\ S1$$
The following values are preferably used:

$S1 \quad = 2\ E8\ N/m$
$S2_b \quad = 0.7\ E7\ N/m$
$S2_o \quad = 6\ E7\ N/m$
$S3 \quad = 2\ E6\ N/m$
$S4 \quad = 2\ E6\ N/m$

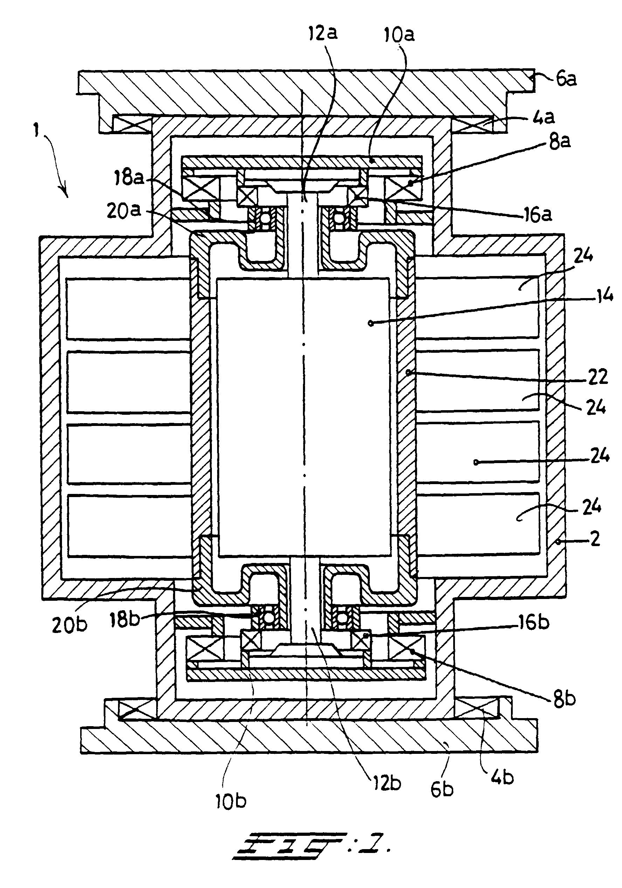

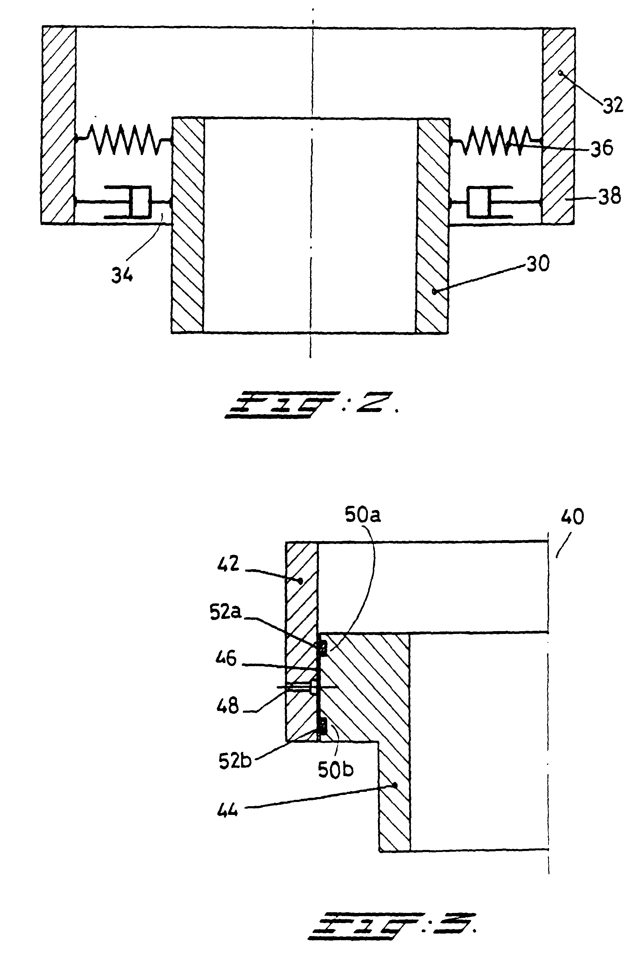

Figure 2 shows in a diagrammatical longitudinal section an equivalent representation of such a coupling element which fulfils both a specific stiffness function and a specific damping function. Showing the coupling between two cylindrical concentric elements, i.e. the inner element 30 and the outer element 32, between which an annular gap 34 (shown exaggeratedly large) is present, but which cannot rotate relative to each other. The stiffness function in the radial direction of the mutual coupling is represented diagrammatically by the spring 36, while the damping function of any radial movements relative to each other is represented by the hydraulic piston-cylinder combination 38.

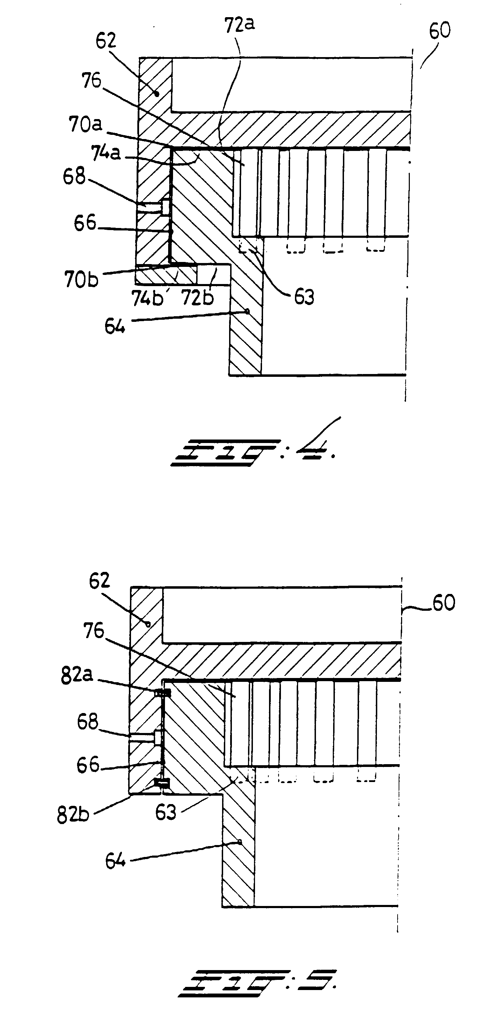

Figure 3 shows a half longitudinal section through a first practical implementation of such a coupling element, which is rotationally symmetrical about the axis 40. The cylindrical outer part is indicated by 42, and the cylindrical inner part by 44; an annular gap 46 is present between them, to which gap damping oil can be supplied through the oil supply opening 48. Above and below said oil supply opening an annular groove 50a, 50b respectively is formed in the outer surface of the part 44, in which grooves O-rings 52a, 52b respectively are accommodated. Said O-rings have a threefold function: they ensure the necessary stiffness of the coupling between the parts 42 and 44, they damp radial movements between said parts, and they also ensure a seal in order to prevent excessive leakage of damping oil supplied through the connection 48. The oil film in the annular gap 46 also provides additional damping of radial movements between the parts 42 and 44.

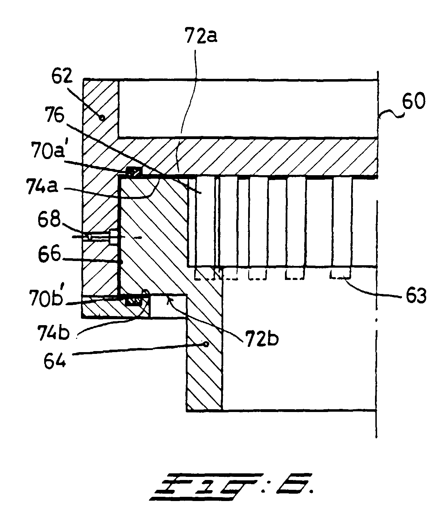

Figure 4 shows a diagrammatic longitudinal section, symmetrically about the axis 60, of a second embodiment of a coupling element. Here again the parts to be coupled, i.e. the outer part 62 and the inner part 64, are concentric and rotationally symmetrical about the axis 60; they enclose each other while leaving free a narrow annular gap 66. Damping oil can be supplied to said annular gap through oil supply channel 68, and leakage thereof is greatly reduced by the fact that the end surfaces lying opposite each other, at right angles to the axis 60, i.e. the surface 72a of the element 62 and the surface 74a of the element 64, on the one hand, and the surface 72b of the element 64 and the surface 74b of the element 62, on the other hand, fit closely together.

In this embodiment the stiffness function is provided by a ring of axial bending bars 76, accommodated between the two cylindrical parts. In the exemplary embodiment shown they go out from the outer part 62 and are fixed by their ends in openings 63, formed in the inner part 64. They can deflect radially with a specific radial stiffness.

Of course, many constructional variants are possible as regards the design and fixing of said bending bars.

The embodiment according to Figure 5 corresponds in broad outline to that of Figure 4; corresponding elements are indicated by identical reference numbers. The difference from the embodiment according to Figure 4 lies in the fact that the sealing function is performed by piston rings 82a, 82b above and below the damping oil supply 68 respectively.

The embodiment according to Figure 6 largely corresponds to that according to Figure 4 and differs therefrom through the fact that the sealing function is performed in this case by the O-rings 70a', 70b'.

Embodiments without sealing constructions for the damping oil are also possible, but then a higher damping oil flow rate is needed.

## Claims

1. Flywheel energy storage device (1), comprising a housing (2) supported on the environment (6a, 6b), a central stator (14) supported therein, and a rotor (22), which is supported rotatably by said stator (14) by means of two ball-bearings (18a, 18b), is coaxial with said stator (14) and encloses it, **characterized in that** said ball-bearings (18a, 18b) have a first radial stiffness with value S1 and are each accommodated between the rotor (22) and a top (10a) and bottom (10b) auxiliary carrier respectively, the top auxiliary carrier (10a), directly coupled to the top end (12a) of the central, cylindrical stator (14) is supported on the top bearing (18a) by means of a top coupling element (16a) having a second radial stiffness $S2_b$, and the bottom auxiliary carrier (10b) directly coupled to the bottom end (12b) of the central, cylindrical stator (14) is supported on the bottom bearing (18b) by means of a bottom coupling element (16b) having a second radial stiffness $S2_o$, the value of $S2_b$, $S2_o$ respectively, lying between 1/50 S1 and 1/2 S1, while the respective auxiliary carriers (10a, 10b) are connected at the top and bottom side to the housing (2) by means of coupling elements (8a, 8b) respectively, whose combined radial stiffness has a value S3 lying between 1/50 and 1/5 of the mean value of $S2_b$ and $S2_o$ :
$$\frac{(S2_b + S2_o)}{2}$$ and the following also applies:
$1E8 \lessgtr S1 \leq 5E8$ N/m.

2. Flywheel energy storage device according to claim 1, **characterized in that** the housing support (4a, 4b) has a fourth radial stiffness with a total value S4 lying between 1/500 S1 and a 1/50 S1.

3. Flywheel energy storage device according to claims 1 - 2, **characterized by** the following values of the respective radial stiffnesses:

S1     = 2 E8 N/m
$S2_b$   = 0.7 E7 N/m
$S2_o$   = 6 E7 N/m
S3     = 2 E6 N/m
S4     = 2 E6 N/m

4. Flywheel energy storage device according to claims 1 - 3, **characterized in that** each of the coupling elements with radial stiffness is formed by a first part (44, 64) with cylindrical outer surface, which is confined with predetermined play within the cylindrical inner surface of a second part (42, 62), which is designed with a bore opening (48; 68) out into said inner surface, for the supply of damping oil into the annular gap (46, 66) between and determined by the respective cylindrical surfaces of the first and second part, while a spring element is accommodated between the first and second part.

5. Energy storage device according to claim 4, **characterized in that** the spring element is formed by a ring of elastic supporting fingers (76) or bending bars (76) which are coaxial with the axis of the cylindrical surfaces.

**Patentansprüche**

1. Energiespeicher-Schwungrad (1), umfassend ein Gehäuse (2), das von der Umgebung (6a, 6b) gestützt ist, einen zentralen Stator (14), der in dem Gehäuse (2) angeordnet ist, und einen Rotor (22), der rotierbar von dem Stator (14) mittels zwei Kugellagern (18a, 18b) gehalten wird, koaxial zu dem Stator (14) angeordnet ist und diesen umschließt, dadurch gekennzeichnet, daß die Kugellager (18a, 18b) eine erste radiale Steifheit mit einem Wert S1 aufweisen und jeweils zwischen dem Rotor (22) und einem oberen (10a) bzw. einem unteren (10b) Hilfsträger angeordnet sind, daß der obere Hilfsträger (10a), der direkt mit dem oberen Ende (12a) des zentralen, zylinderförmigen Stators (14) verbunden ist, auf dem oberen Lager (18a) mittels eines oberen Verbindungselementes (16a) gehalten wird, das eine zweite radiale Steifheit $S2_b$ aufweist, und daß der untere Hilfsträger (10b), der direkt mit dem unteren Ende (12b) des zentralen, zylinderförmigen Stators (14) verbunden ist, auf dem unteren Lager (18b) mittels eines unteren Verbindungselementes (16b) gehalten wird, das eine zweite radiale Steifheit $S2_0$ aufweist, wobei der Wert von $S2_b$ und $S2_0$ jeweils zwischen 1/50 S1 und 1/2 S1 liegt, während die jeweiligen Hilfsträger (10a, 10b) an der oberen und unteren Seite mit dem Gehäuse (2) mittels Verbindungselementen (8a bzw. 8b) verbunden sind, deren kombinierte Steifheit einen Wert S3 aufweist, der zwischen 1/50 und 1/5 des Mittelwertes von $S2_b$ und $S2_0$ liegt:
$$\frac{(S2_b + S2_0)}{2}$$ wobei ferner das folgende gilt:
$1E8 \lessgtr S1 \leq 5E8$ N/m.

2. Energiespeicher-Schwungrad nach Anspruch 1, dadurch gekennzeichnet, daß die Gehäusestütze (4a, 4b) eine vierte radiale Steifheit mit einem Gesamtwert S4 aufweist, der zwischen 1/500 S1 und 1/50 S1 liegt.

3. Energiespeicher-Schwungrad nach Ansprüchen 1-2, gekennzeichnet durch die folgenden Werte für die jeweilige radiale Steifheit:

S1     = 2 E8 N/m
$S2_b$   = 0,7 E7 N/m
$S2_0$   = 6 E7 N/m
S3     = 2 E6 N/m
S4     = 2 E6 N/m

4. Energiespeicher-Schwungrad nach Ansprüchen 1-3, dadurch gekennzeichnet, daß jedes der radiale Steifheit aufweisenden Verbindungselemente durch ein erstes Teil (44, 64) mit zylindrischer Außenfläche gebildet ist, welches mit vorbestimmtem Spiel innerhalb der zylindrischen Innenfläche eines zweiten Teils (42, 62) angeordnet ist, und letzteres mit einer sich zu dieser Innenfläche hin öffnenden Bohrung (48; 68) für die Zufuhr von Dämpfungsöl zu dem ringförmigen Zwischenraum (46, 66) versehen ist, der sich zwischen den jeweiligen zylindrischen Flächen des ersten und zweiten Teils befindet und durch diese gebildet wird, wobei zwischen dem ersten und zweiten Teil ein Federelement angeordnet ist.

5. Energiespeicher-Schwungrad nach Anspruch 4, dadurch gekennzeichnet, daß das Federelement durch einen Ring von elastischen Stützfingern (76) oder Biegungsstäben (76) gebildet ist, die koaxial zur Achse der zylindrischen Oberflächen angeordnet sind.

## Revendications

1. Dispositif de stockage d'énergie à volant (1) comprenant un boîtier (2) supporté sur l'environnement (6a, 6b), un stator central (14) supporté dans celui-ci et un rotor (22), qui est supporté à rotation par ledit stator (14) au moyen de deux paliers à billes (18a, 18b), est coaxial avec ledit stator (14) et loge celui-ci, caractérisé en ce que lesdits paliers à billes (18a, 18b) ont une première rigidité radiale avec une valeur S1, et sont logés chacun entre le rotor (22) et un porteur auxiliaire supérieur (10a) et inférieur (10b) respectivement, le support auxiliaire supérieur (10a), couplé directement à l'extrémité supérieure (12a) du stator cylindrique central (14), est supporté sur le palier supérieur (18a) au moyen d'un élément de couplage supérieur (16a) ayant une seconde rigidité radiale $S2_b$, et le support auxiliaire inférieur (10b), couplé directement à l'extrémité inférieure (12b) du stator cylindrique central (14), est supporté sur le palier inférieur (18b) au moyen d'un élément de couplage inférieur (16b) ayant une seconde rigidité radiale $S2_0$, la valeur de $S2_b$, $S2_0$ respectivement, étant comprise entre 1/50 S1 et 1/2 S1, tandis que les supports auxiliaires respectifs (10a, 10b) sont connectés sur les côtés supérieur et inférieur au boîtier (2) au moyen d'éléments de couplage (8a, 8b) respectivement, dont la rigidité radiale combinée a une valeur S3 comprise entre 1/50 et 1/5 de la valeur moyenne de $S2_b$ et $S2_0$ :

$$\left( \frac{S2_b + S2_0}{2} \right)$$

et la relation suivante s'applique :
$1E8 \leq S1 \leq 5E8$ N/m.

2. Dispositif selon la revendication 1, caractérisé en ce que le support de boîtier (4a, 4b) a une quatrième rigidité radiale avec une valeur totale S4 comprise entre 1/500 S1 et 1/50 S1.

3. Dispositif selon les revendications 1 à 2, caractérisé par les valeurs suivantes des rigidités radiales respectives :

S1  = 2 E8 N/m
$S2_b$ = 0.7 E7 N/m
$S2_0$ = 6 E7 N/m
S3  = 2 E6 N/m
S4  = 2 E6 N/m

4. Dispositif selon les revendications 1 à 3, caractérisé en ce que chacun des éléments de couplage avec une rigidité radiale est formé par une première partie (44, 64) avec une surface externe cylindrique, qui est confinée avec un jeu prédéterminé dans la surface interne cylindrique d'une seconde partie (42, 62), qui est agencée avec un trou (48 ; 68) s'ouvrant dans ladite surface interne, pour l'alimentation en huile d'amortissement dans l'espace annulaire (46, 66) entre et déterminé par les surfaces cylindriques respectives de la première et de la seconde parties, tandis qu'un élément à ressort est logé entre les première et seconde parties.

5. Dispositif selon la revendication 4, caractérisé en ce que l'élément à ressort est formé par une bague de doigts de support élastiques (76) ou de tiges pliantes (76) qui sont coaxiaux avec l'axe des surfaces cylindriques.

FIG. 1.

_FIG:2._

_FIG:3._

62
72a
60
76
70a
74a
68
66
70b
74b 72b
64
63

*FIG:4.*

62
60
76
82a
68
66
82b
63
64

*FIG:5.*

72a

62

76

70a'

74a

68

66

70b'

74b

64

60

63

72b

FIG: 6.